# EUROPÄISCHE PATENTSCHRIFT

(11) **EP 3 028 225 B1**
(45) Veröffentlichungstag und Bekanntmachung des Hinweises auf die Patenterteilung: **26.04.2017**
(21) Anmeldenummer: 14750161.3
(22) Anmeldetag: 29.07.2014
(51) Int. Cl.: G06Q 10/08, G06K 19/077, B61L 25/02, G07C 9/00

(54) **SYSTEM ZUR LOKALISIERUNG VON OBJEKTEN**
SYSTEM FOR DETERMINING THE LOCATION OF OBJECTS
SYSTÈME DE LOCALISATION DES OBJETS

(30) Priorität: 02.08.2013 AT 504872013
(43) Veröffentlichungstag der Anmeldung: 08.06.2016
(73) Patentinhaber: Siemens Aktiengesellschaft, 80333 München (DE)
(72) Erfinder: SCHIEFER, Martin, A-3100 St. Pölten (AT); JAHN, Martin, A-3862 Eisgarn (AT)
(74) Vertreter: Maier, Daniel Oliver
(86) Internationale Anmeldenummer: PCT/EP2014/066275
(87) Internationale Veröffentlichungsnummer: WO 2015/014837

(56) Entgegenhaltungen:
- US-A- 5 774 876
- US-A1- 2002 084 387
- US-A1- 2002 089 434
- US-A1- 2006 280 181
- US-B1- 7 518 511

## Beschreibung

Die Erfindung betrifft ein System zur Lokalisierung von Objekten auf einem abgegrenzten Areal.

Eine wesentliche Aufgabe beim Management von Fuhrparks ist die Lokalisierung der Fahrzeuge insbesondere auch während ihres Aufenthaltes in einem Stützpunkte wie einem Betriebshof oder einer Garage. Nur bei Kenntnis der exakten Position jedes Fahrzeuges sind Maßnahmen wie die Betankung, Wartung oder Reparatur, aber auch die Ausfahrt effizient durchführbar.

Bekannte Lokalisierungssysteme nutzen elektromagnetische Wellen, Schall oder optische Methoden zur Positionsbestimmung.

Ein Beispiel für die Nutzung elektromagnetischer Wellen sind Radarsysteme. Radargeräte senden ein Primärsignal aus und empfangen das Echo, auch Sekundärsignal genannt. Hierbei können reflektierende Ziele nicht nur detektiert, sondern auch identifiziert werden, wenn beispielsweise das Sekundärsignal durch Modulation eine eindeutige Kennung aufweist. Solche Ziele, auch Transponder-Tags genannt, können als aktive oder passive Transponder ausgestaltet sein.

Passive Transponder beziehen ihre Energie aus dem elektromagnetischen Feld des Senders, weshalb ihre Reichweite relativ gering ist. Aktive Transponder verfügen hingegen über eine eigene Energieversorgung (z.B. Batterie), mit deren Hilfe das modulierte Sekundärsignal über eine größere Distanz erfassbar ist.

Eine weitere Möglichkeit ist der Einsatz des Sekundärradarprinzips. Dabei werden neben fixen Radarbasisstationen auch die zu identifizierenden Objekte mit mobilen Radarmodulen versehen. Die Radarbasisstationen kommunizieren nun mit den mobilen Radarmodulen beispielsweise über synchronisierte frequenzmodulierte Dauerstrich (FMCW) Frequenzrampen.

Die Positionsbestimmung kann nun dadurch erfolgen, dass sämtliche Objekte mit Transpondern versehen sind und jeder Stellplatz mit einer eigenen Sende-Empfangsanlage, den sogenannten Lesegeräten überwacht wird. Der Aufwand dafür ist allerdings erheblich und die Flexibilität des Systemes ist gering, da nur definierte Stellplätze erfasst werden.

Eine effizientere Methode zur Positionsbestimmung nutzt das sogenannte Laterationsprinzip, bei dem über Laufzeitmessungen an elektromagnetischen Signalen die Entfernungen zu zumindest drei Sendern mit bekannter Position ermittelt werden und daraus die Position des Objektes bestimmt wird. Bekannt sind dazu insbesondere die sogenannten Satellitennavigationssysteme (GPS, Glonass, Galileo).

Der Einsatz dieser Methode setzt die ungehinderte Ausbreitung der elektromagnetischen Signale voraus. Dies ist in stark reflektierender Umgebung wie in Betriebshöfen oder Garagen aber nicht der Fall, sodass der zuverlässige Einsatz dieser Systeme dort nicht gewährleistet ist.

Dokument US 2002/089434 A1 beschreibt ein System zur Lokalisierung von Fahrzeugen, Paletten oder Personen.

Der Erfindung liegt daher die Aufgabe zugrunde, ein zuverlässiges Verfahren zur Lokalisierung von Objekten auf einem abgegrenzten Areal anzugeben.

Erfindungsgemäß wird diese Aufgabe gelöst mit einem Verfahren nach Anspruch 1.

Das erfindungsgemäße System zur Lokalisierung von Objekten ermöglicht eine robuste und eindeutige Positionsbestimmung mit geringem Aufwand.

Vorteilhafte Ausgestaltungen ergeben sich aus den Unteransprüchen.

Die Erfindung wird anhand eines in den Figuren dargestellten Ausführungsbeispieles näher erläutert. Es zeigen beispielhaft:
Fig. 1 die beispielhafte Anordnung von Positionierungsflächen und Objekten.
Fig. 2 die beispielhafte Lokalisierung von Fahrzeugen.
Fig.3 die Erfassung von Objekten in einer Datenbank eines zentralen Rechnersystemes

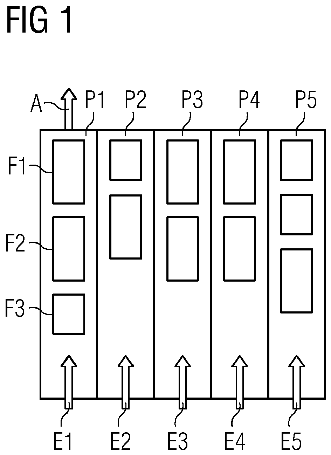

Fig. 1 zeigt beispielhaft die Anordnung von Parkspuren als Positionierungsflächen P1, P2, P3, P4, P5. Auf den Parkspuren, die sich beispielsweise auf dem Betriebsgelände einer Spedition befinden können, können jeweils mehrere Fahrzeuge F1, F2, F3 abgestellt werden. Jede Parkspur weist einen definierten Einfahrtsbereich E1, E2, E3, E4, E5, und einen Ausfahrtsbereich A1, A2, A3, A4, A5 auf, von denen jeder mit einem Transponder T versehen ist.

Jedes Fahrzeug F1, F2, F3 ist an seiner Fahrzeugfront mit einem Lesegerät R und an seinem Fahrzeugheck mit einem Transponder T versehen.

Lesegeräte R und Transponder T beruhen auf dem aus dem Stand der Technik bekannten RFID (Radio Frequency Identifikation) - Prinzip.

Die Erfindung ist allerdings nicht auf diese Technik beschränkt, so könnte beispielsweise auch das Sekundärradarprinzip eingesetzt werden und so neben einer Identifizierung des Transponders T eine Abstandsermittlung erfolgen. Durch eine Abstandsmessung zwischen Lesegerät R und Transponder T könnte in vorteilhafter Weise auch die Lokalisierungsgenauigkeit des erfindungsgemäßen Systems erhöht werden.

Denkbar wäre es auch, die Lesegeräte R mit einer zusätzlichen Positionsbestimmungseinheit nach dem Laterationsprinzip zu versehen, um so beispielsweise außerhalb der vorgegebenen Parkspuren eine (grobe) Positionsbestimmung vornehmen zu können.

Ein Beispiel für RFID-Systeme sind die Systeme gemäß ISO 18000-1 ff.

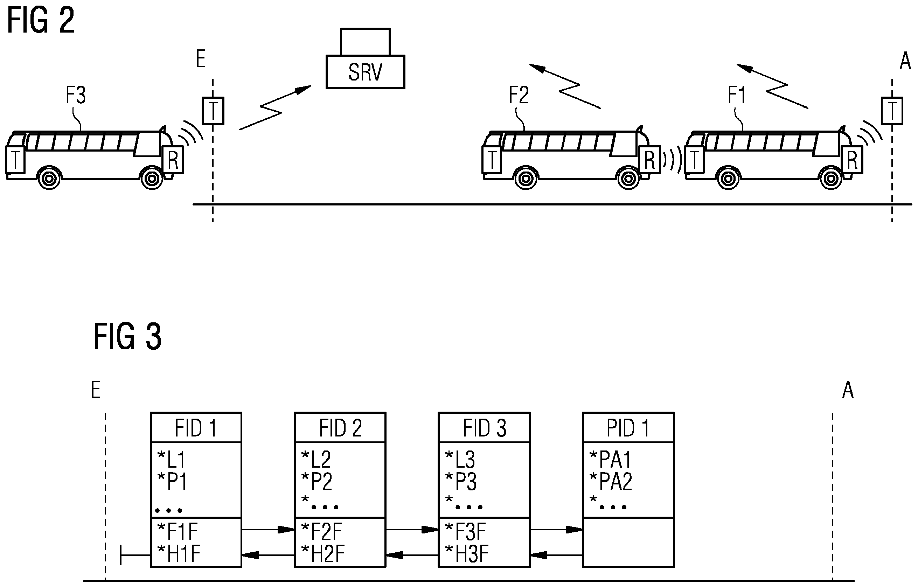

Die Funktionsweise des erfindungsgemäßen Systems wird anhand der Fig. 2 näher erläutert:
Die zu lokalisierenden Fahrzeuge F1, F2, F3 parken auf dem Betriebsgelände ausschließlich auf dafür bestimmten Parkspuren als Positionierungsflächen P1, P2, P3, P4, P5.

Bei Einfahrt in eine bestimmte Parkspur erfasst das Lesegerät R an der Frontseite des Fahrzeuges F1, F2, F3 den dem jeweiligen Einfahrtsbereich E1, E2, E3, E4, E5, zugeordneten Transponder T und speichert dessen Kennung. Durch die eindeutige Zuordnung der Transponder T zu den Einfahrtsbereichen ist nun im Fahrzeug die Information vorhanden, welche Parkspuren als Positionierungsflächen P1, P2, P3, P4, P5 für das Fahrzeug genutzt wird.

Das Fahrzeug fährt nun auf der Parkspur so weit vor, bis es entweder den Ausfahrtsbereich A1, A2, A3, A4, A5 oder ein bereits vorher abgestelltes weiteres Fahrzeug erreicht.

In beiden Fällen erfasst das Lesegerät R des Fahrzeuges den vorab befindlichen Transponder T, der entweder dem Ausfahrtsbereich zugeordnet ist, wenn es sich um das erste geparkte Fahrzeug F1 in dieser Parkspur P1 handelt, oder aber ein weiteres bereits geparktes Fahrzeug identifiziert.

Aufgrund der über die Lesegeräte gesammelten Informationen über die Parkspuren P1, P2, P3, P4, P5, die Ein- und Ausfahrtsbereiche E1, E2, E3, E4, E5, A1, A2, A3, A4, A5 und die benachbarten Fahrzeuge kann nun in einer zentralen Rechnereinheit SRV die eindeutige Position aller Fahrzeuge bestimmt werden.

So ist zum Beispiel aus den von dem zugehörigen Lesegerät R erfassten Daten unmittelbar ersichtlich, dass das dritte Fahrzeug F3 den Einfahrtsbereich E1 der ersten Parkspur P1 passiert hat und sich daher auf dieser Parkspur P1 befindet. Weiterhin wird über den zugehörigen Transponder T das zweite Fahrzeug F2 als vorangereihtes Fahrzeug auf dieser Parkspur erfasst.

Durch Verknüpfung der von den Lesegeräten R aller Fahrzeuge F1, F2, F3 erfassten Daten in einer zentralen Rechnereinheit SRV kann nun auch die Position des dritten Fahrzeuges F3 als drittgereihtes Fahrzeug auf der ersten Parkspur P1 bestimmt werden.

Dazu senden die Lesegeräte R ihre erfassten Daten über eine drahtlose Verbindung an die zentrale Rechnereinheit SRV in denen die Daten aufbereitet, mit Informationen über die Fahrzeuge F1, F2, F3 verknüpft und dargestellt werden.

Diese Darstellung kann beispielsweise nach dem in Fig. 3 dargestellten Schema erfolgen, wonach jede Fahrzeugdarstellung eine Fahrzeugidentität FID 1, FID 2, FID 3, sowie Informationen über die Fahrzeuglängen L1, L2, L3, die Fahrzeugpositionen P1, P2, P3, sowie über die an den Fahrzeugfronten F1F, F2F, F3F erfassten Informationen und die an den Fahrzeughecks befindlichen Transponder H1F, H2F, H3F umfasst.

Das erfindungsgemäße System zur Lokalisierung von Objekten ermöglicht damit eine robuste eindeutige Positionsbestimmung mit geringem Aufwand.

Besonders vorteilhaft ist der Einsatz bei Fahrzeugen beispielsweise in Garagen oder auf dem Betriebsgelände von Transportunternehmen, es ist aber auch denkbar, das System zu Lokalisierung von anderen Objekten wie beispielsweise von Containern in Verladehafen, Schienenfahrzeugen in Verschubbahnhöfen etc. zu nutzen.

Dabei wäre es ggf. auch zweckmäßig, Lesegeräte R und Transponder T an mehreren Seiten der Objekte anzubringen, womit eine zwei- oder dreidimensionale Positionsbestimmung ermöglicht wird.

### Bezugszeichenliste

- P1, P2, P3, P4, P5: Positionierungsflächen
- F1, F2, F3: Fahrzeuge
- E1, E2, E3, E4, E5: Einfahrtsbereiche
- A1, A2, A3, A4, A5: Ausfahrtsbereiche
- FID 1, FID 2, FID 3: Fahrzeugidentitäten
- L1, L2, L3: Fahrzeuglängen
- P1, P2, P3: Fahrzeugpositionen
- F1F, F2F, F3F: Fahrzeugfronten
- H1F, H2F, H3F SRV: zentrale Rechnereinheit
- T: Transponder
- R: Lesegerät

## Patentansprüche

1. System zur Lokalisierung von Objekten auf einem abgegrenzten Areal mittels Transpondern und Lesegeräten zur Erfassung der vorab befindlichen Transponder, **dadurch gekennzeichnet, dass** das Areal vorbestimmte Positionierungsflächen (P1, P2, P3, P4, P5) aufweist, auf welchen jeweils mehrere Objekte (F1, F2, F3) angeordnet werden können, dass jedes Objekt an zumindest einer Seite zumindest ein Lesegerät (R) und an zumindest einer weiteren Seite zumindest einen Transponder (T) aufweist, dass weiterhin jede Positionierungsfläche (P1, P2, P3, P4, P5) einen Einfahrtsbereich (E1, E2, E3, E4, E5) und einen Ausfahrtsbereich (A1, A2, A3, A4, A5) aufweist, dass Einfahrts- und Ausfahrtsbereich jeweils mit zumindest einem Transponder (T) versehen sind und dass die Lesegeräte (R) mit einer zentralen Rechnereinheit (SRV) verbunden sind, und dass mittels der zentralen Rechnereinheit (SRV) aus den übermittelten Daten der Lesegeräte ( R) die Position der Objekte (F1, F2, F3) auf den Positionierungsflächen (P1, P2, P3, P4, P5) ermittelt wird.

2. System nach Anspruch 1, **dadurch gekennzeichnet, dass** die Positionierungsflächen (P1, P2, P3, P4, P5) länglich ausgestaltet sind und jeweils mehrere Objekte (F1, F2, F3) hintereinander gereiht angeordnet werden können und dass jedes Objekt an einer Vorderseite ein Lesegerät(R) und an einer Hinterseite einen Transponder (T) aufweist.

3. System nach Anspruch 2, **dadurch gekennzeichnet, dass** als Objekte Fahrzeuge (F1, F2, F3) vorgesehen sind und die Positionierungsflächen (P1, P2, P3, P4, P5) als Parkspuren ausgestaltet sind.

4. System nach einem der Ansprüche 1 bis 3, **dadurch gekennzeichnet, dass** Lesegeräte (R) und Transponder (T) auf dem RFID-Prinzip beruhen.

5. System nach einem der Ansprüche 1 bis 4, **dadurch gekennzeichnet, dass** die Lesegeräte (R) eine zusätzliche Positionsbestimmungseinheit nach dem Laterationsprinzip aufweisen.

## Claims

1. System for determining the location of objects over a limited area using transponders and readers to register the previously located transponder, **characterised in that** the area has predetermined positioning surfaces (P1, P2, P3, P4, P5), on which a number of objects (F1, F2, F3) can be arranged in each case, that each object has at least one reader (R) on at least one side and at least one transponder (T) on at least one further side, that each positioning surface (P1, P2, P3, P4, P5) also has an arrival area (E1, E2, E3, E4, E5) and an departure area (A1, A2, A3, A4, A5), that arrival and departure areas are each provided with at least one transponder (T) and that the readers (R) are connected to a central processing unit (SRV), and that using the central processing unit (SRV) the position of the objects (F1, F2, F3) on the positioning surfaces (P1, P2, P3, P4, P5) is determined from the data transmitted by the readers (R).

2. System according to claim 1, **characterised in that** the positioning surfaces (P1, P2, P3, P4, P5) are configured to be elongated and in each case a number of objects (F1, F2, F3) can be arranged one behind the other in rows and that each object has a reader (R) on a front side and a transponder (T) on a rear side.

3. System according to claim 2, **characterised in that** vehicles (F1, F2, F3) are provided as objects and the positioning surfaces (P1, P2, P3, P4, P5) are configured as parking lanes.

4. System according to one of claims 1 to 3, **characterised in that** readers (R) and transponders (T) are based on the RFID principle.

5. System according to one of claims 1 to 4, **characterised in that** the readers (R) have an additional position determination unit in accordance with the lateration principle.

## Revendications

1. Système de localisation d'objets sur une aire délimitée au moyen de transpondeurs et d'appareils de lecture pour détecter les transpondeurs situés en amont, **caractérisé en ce que** l'aire comporte des surfaces de positionnement prédéfinies (P1, P2, P3, P4, P5) sur lesquelles peuvent être disposés respectivement plusieurs objets (F1, F2, F3), **en ce que** chaque objet présente, sur au moins un côté, au moins un appareil de lecture (R) et, sur au moins un autre côté, un transpondeur (T), **en ce que**, en outre, chaque surface de positionnement (P1, P2, P3, P4, P5) présente une zone d'entrée (E1, E2, E3, E4, E5) et une zone de sortie (A1, A2, A3, A4, A5), **en ce que** les zones d'entrée et de sortie sont chacune pourvues d'au moins un transpondeur (T) et **en ce que** les appareils de lecture (R) sont reliés à une unité de calcul centrale (SRV) et **en ce qu'**est déterminée, au moyen de l'unité de calcul centrale (SRV), à partir des données des appareils de lecture (R) transmises, la position des objets (F1, F2, F3) sur les surfaces de positionnement (P1, P2, P3, P4, P5).

2. Système selon la revendication 1, **caractérisé en ce que** les surfaces de positionnement (P1, P2, P3, P4, P5) sont allongées et **en ce que** respectivement plusieurs objets (F1, F2, F3) peuvent être placés les uns derrière les autres et **en ce que** chaque objet comporte, sur une face avant, un appareil de lecture (R) sur une face avant et un transpondeur (T) sur une face arrière.

3. Système selon la revendication 2, **caractérisé en ce que** des véhicules (F1, F2, F3) sont prévus en tant qu'objets et **en ce que** les surfaces de positionnement (P1, P2, P3, P4, P5) sont conçues comme pistes de stationnement.

4. Système selon l'une des revendications 1 à 3, **caractérisé en ce que** les appareils de lecture (R) et les transpondeurs (T) reposent sur le principe du RFID.

5. Système selon l'une des revendications 1 à 4, **caractérisé en ce que** les appareils de lecture (R) comportent une unité supplémentaire de détermination de position selon le principe de latération.
